(19) Europäisches Patentamt
European Patent Office
Office européen des brevets

(11) **EP 3 022 096 B1**

(12) **FASCICULE DE BREVET EUROPEEN**

(45) Date de publication et mention de la délivrance du brevet:
**22.03.2017 Bulletin 2017/12**

(51) Int Cl.:
*B60T 7/04* *(2006.01)*       *B60T 11/10* *(2006.01)*
*B60T 11/16* *(2006.01)*       *B60T 11/18* *(2006.01)*
*B60T 11/20* *(2006.01)*       *B60T 11/224* *(2006.01)*
*B60T 11/236* *(2006.01)*

(21) Numéro de dépôt: **14738807.8**

(22) Date de dépôt: **09.07.2014**

(86) Numéro de dépôt international:
**PCT/EP2014/064681**

(87) Numéro de publication internationale:
**WO 2015/007584 (22.01.2015 Gazette 2015/03)**

(54) **UNITE DE COMMANDE DE FREINAGE**

BREMSSTEUEREINHEIT

BRAKE CONTROL UNIT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.07.2013 FR 1357114**

(43) Date de publication de la demande:
**25.05.2016 Bulletin 2016/21**

(73) Titulaire: **Robert Bosch GmbH**
**70442 Stuttgart (DE)**

(72) Inventeurs:
• **ANDERSON, Chris**
**F-75002 Paris (FR)**
• **SCHALKWIJK, Christian**
**F-03400 Yzeure (FR)**
• **SPROCQ, Raynald**
**F-77450 Esbly (FR)**
• **CAGNAC, Bastien**
**F-60660 Cramoisy (FR)**

(56) Documents cités:
WO-A1-97/32765       DE-A1-102012 018 134
GB-A- 2 155 571       GB-A- 2 169 676
US-A- 5 246 281

EP 3 022 096 B1

**Description**

**Domaine de l'invention**

La présente invention a pour objet une unité de commande de freinage ayant un piston primaire délimitant une chambre primaire reliée à un circuit primaire et un piston secondaire délimitant une chambre secondaire reliée à un circuit secondaire, l'unité de commande recevant la demande de freinage par le poussoir actionné par le conducteur, cette demande étant détectée par le capteur de déplacement du mouvement du poussoir pour commander le piston primaire qui lui-même pousse le piston secondaire, en générant une pression dans la chambre primaire qui exerce alors une poussée hydraulique sur la section arrière du piston secondaire.

**Etat de la technique**

De façon générale, l'invention a pour objet une unité de commande de freinage qui correspond sensiblement à un maître-cylindre tandem et est destinée par exemple à des véhicules hybrides. La chambre primaire est reliée au circuit hydraulique des freins de l'essieu arrière qui n'est pas moteur. La chambre secondaire est reliée de façon découplée au circuit de frein de l'essieu avant. L'essieu avant est moteur. Il est équipé de moteurs électriques assurant le freinage par récupération (freinage dynamique) en combinaison avec un freinage mécanique par des freins commandés par un circuit de freinage. Mais le circuit de freinage de l'essieu avant n'est pas relié directement à la chambre secondaire de pression qui intervient indirectement. Le freinage de l'essieu avant est assuré d'abord principalement par le freinage dynamique, les moteurs électriques fonctionnant en générateur et à partir d'une certaine vitesse jusqu'à la vitesse nulle, le freinage mécanique est combiné au freinage dynamique pour le remplacer complètement lorsque la vitesse diminue en dessous par exemple de 10 km/h et cela jusqu'à 0 km/h.

Le document GB 2 155 571 A presente l'état de la technique le plus proche et divulgue une unité de commande e freinage ayant tous les caractéristiques du préambule de la revendication indépendante.

Il convient de rappeler que la pression générée dans la chambre secondaire d'un maître cylindre tandem résulte de la poussée générée par la pression primaire agissant sur la section hydraulique de la partie arrière du piston secondaire, cette poussée générant alors une pression dans la chambre secondaire selon la section hydraulique de la partie avant du piston secondaire. Les sections hydrauliques des parties avant et arrière du piston secondaire étant habituellement de même valeur, les pressions primaires et secondaires d'un maître-cylindre classique sont sensiblement les mêmes.

De façon générale, certains systèmes de freinage récents nécessitent un maître-cylindre ayant un alésage de petites dimensions pour de multiples raisons telles que par exemple les caractéristiques en mode dégradé ou la sensation de pédale. Or, réaliser des alésages de sections réduites dans des maîtres-cylindres et des rainures pour des coupelles de petites dimensions est un usinage difficile et coûteux. De plus, des coupelles (ou joints à lèvres), de petites dimensions qui seraient nécessaires n'existent pas dans les gammes de fabrication standard. Ces joints spéciaux seraient difficiles à développer, à fabriquer et à installer dans la gorge entourant l'alésage, par comparaison à l'installation de joints à lèvre de grand diamètre.

En outre, usiner des gorges dans des alésages de petit diamètre, est une opération difficile et coûteuse.

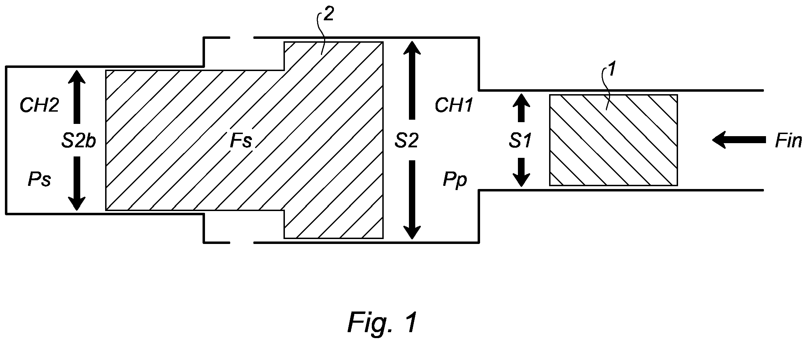

La figure 1 est un schéma simplifié d'un maître-cylindre tandem, connu, servant à décrire la définition de la caractéristique liant la force d'entrée $F_{IN}$, appliquée par le poussoir au piston primaire P1 et la pression Ps dans la chambre secondaire CH2.

Le maître-cylindre tandem a un piston primaire P1 dont la section avant S1 délimite la chambre primaire CH1 par ailleurs délimitée par la section arrière S2 du piston secondaire P2.

La section avant S2b du piston secondaire P2 délimite la chambre secondaire CH2.

Sous l'effet de la force $F_{IN}$, il règne une pression primaire Pp dans la chambre primaire CH1 et cette pression Pp appliquée à la section arrière secondaire S2 du piston secondaire P2 génère une force Fs déplaçant le piston secondaire dont la section avant S2b génère la pression secondaire Ps dans la chambre secondaire S2b.

Par définition, la relation entre la force d'entrée $F_{IN}$ et la pression secondaire Ps est de la forme :

$$P_S = \frac{F_{IN}}{k}$$

relation dans laquelle le coefficient k a la dimension d'une surface ; ce coefficient est appelé par convention « section équivalente Se » de sorte que l'on a :

$$P_S = \frac{F_{IN}}{Se} \qquad (1)$$

Or, dans le maître-cylindre défini ci-dessus, la pression primaire Pp dans la chambre primaire CH1 est donnée par la relation suivante :

$$P_p = \frac{F_{IN}}{S1} \qquad (2)$$

Cette pression primaire engendre la force Fs exercée sur le piston secondaire P2 suivant la relation :

$$F_{S} = P_p \cdot S_2 = \frac{F_{IN}}{S_l} \cdot S_2 \qquad (3)$$

La force Fs génère la pression Ps dans la chambre secondaire CH2 :

$$P_S = \frac{F_S}{S_{2b}} = F_{IN} \cdot \frac{S_2}{S_l \cdot S_{2b}} \qquad (4)$$

On peut donc écrire la section équivalente S2 comme suit :

$$P_S = \frac{F_{IN}}{Se} \quad (1) \rightarrow Se = \frac{F_{IN}}{P_S} = \frac{S_l \cdot S_{2b}}{S_2}$$

On obtient ainsi la relation :

$$Se = \frac{S_l}{S_2} \cdot S_{2b} \qquad (5)$$

La présentation faite ci-dessus avec les sections des pistons, selon la pratique usuelle dans le domaine des maîtres-cylindres, donne le diamètre des pistons ou des joints (coupelles) selon la formule classique suivante reliant la surface d'un disque circulaire à son diamètre D

$$S = \pi \times \frac{D^2}{2^2} = \frac{\pi}{4} \times D^2 \qquad (6)$$

ou encore

$$D = 2\sqrt{\frac{S}{\pi}} \qquad (6bis)$$

## But de l'invention

Le problème que se propose de résoudre l'invention est celui de l'adaptation de la pression dans la chambre primaire et dans la chambre secondaire en fonction des exigences des constructeurs en développant une unité de commande de freinage ou maître-cylindre tandem permettant de réaliser des petites sections hydrauliques en utilisant des moyens classiques et des joints des catalogues standards des fabricants sans nécessiter de fabrication spéciale.

## Exposé et avantages de l'invention

A cet effet, la présente invention a pour objet une unité de commande de freinage ou maître-cylindre tandem du type défini ci-dessus caractérisée par

- un piston plongeur porté par le piston primaire, solidaire en translation de celui-ci et pénétrant librement dans le piston secondaire de sorte que la chambre primaire est délimitée entre le piston primaire, le piston secondaire dans leur alésage et le piston plongeur,
- le piston primaire ayant un joint primaire de pression, le piston secondaire un joint secondaire de pression et le piston plongeur étant muni d'un joint primaire d'isolation pour son engagement dans le piston secondaire de sorte que

   - le piston primaire a une section hydraulique avant égale à la différence de sa section primaire de pression et de sa section primaire d'isolation, et
   - le piston secondaire a une section hydraulique arrière égale à la différence entre sa section secondaire d'isolation et sa section primaire d'isolation,
   - et la section avant du piston secondaire est liée à la section équivalente reliant la force d'entrée à la pression secondaire par la relation

$$\text{Slb} = A\,\frac{\text{Se} - \text{B}}{\text{Se} - \text{C}}$$

cette relation donnant la section primaire d'isolation et le diamètre du joint primaire d'isolation en fonction de la section équivalente.

Dans le cas de la présente invention, la section hydraulique de la partie arrière du piston secondaire est égale à la différence de la section du joint secondaire d'isolation et celle du joint primaire d'isolation. La section hydraulique de la partie avant du piston secondaire résulte de la valeur du diamètre du joint de pression secondaire sur sa partie avant. Ces deux sections hydrauliques pouvant être de valeur différentes selon les dimensions du piston et du diamètre des joints sélectionnés, la loi de montée en pression de la chambre secondaire fonction de l'effort d'entrée conducteur peut être déterminée indépendamment de celle de la chambre primaire, et peut par ailleurs être équivalente à celle générée par un piston et joint classiques de bien plus petit diamètre dont la réalisation serait difficile pour les raisons précédemment évoquées.

Ainsi de manière générale puisque la section équivalente est le coefficient liant la force d'entrée appliquée au piston primaire et la pression dans la chambre secondaire, on obtient simplement, selon l'invention, la section du joint primaire d'isolation, c'est-à-dire le diamètre de ce joint primaire d'isolation, ce qui pour une section primaire de pression et une section secondaire de pression, données ou inchangées, permettent de définir la section primaire d'isolation en fonction des différentes sections équivalentes qui sont imposées au maître-cylindre.

Ainsi la mise en oeuvre de plusieurs dimensionnements dans la gamme produit selon les besoins d'un véhicule donné peut être facilitée. Par exemple on pourra choisir de figer les valeurs du joint de pression primaire et du joint de pression secondaire afin d'utiliser des pièces standards de diamètre classique, et dont la taille facilitera par ailleurs l'intégration d'autres éléments dans la produit servant pour d'autres fonctions, par exemple un aimant de taille suffisante pour une fonction capteur de position. Selon les besoins d'un véhicule donné fonction de sa masse et de sa répartition de masse entre les deux essieux, les lois de montée en pression des chambres primaire et secondaire fonction de l'effort d'entrée conducteur pourront être réglées indépendamment l'une de l'autre en modifiant respectivement le diamètre du joint d'isolation primaire du piston plongeur ainsi que celui du palier qui le reçoit dans le piston secondaire, et celui du joint d'isolation secondaire ainsi que le palier rapporté qui le reçoit. Ces transformations n'affectent pas les autres parties de l'unité de commande de freinage et notamment les alésages principaux du corps si bien que cette réalisation offre une très grande souplesse d'adaptation sans avoir à modifier pratiquement une chaîne de fabrication.

De façon particulièrement avantageuse, le joint de pression primaire et le joint de pression secondaire sont des coupelles, c'est-à-dire des joints annulaires à section en U couché avec deux lèvres et le joint d'isolation primaire est un joint torique.

Ainsi, la section hydraulique primaire et la section hydraulique secondaire se modifient simplement par la section du joint primaire d'isolation disponible dans une gamme continue de dimensions même très réduites, et par la section du joint secondaire d'isolation disponible dans la gamme de coupelle à lèvre existante. Cela permet avantageusement de réduire les sections hydrauliques sans avoir à réduire les sections des joints de pression primaire et secondaires qui, dans ces conditions, ne nécessitent pas de fabrication spéciale difficilement réalisable et d'un coût qui serait prohibitif puisque ces joints peuvent être des joints de dimensions minimales disponible dans les gammes de fabrication. Ainsi, on pourra utiliser des joints, c'est-à-dire des coupelles de pression qui sont réalisées dans des bonnes conditions de fiabilité et d'économie jusqu'à un diamètre égal à 19 mm sans avoir à descendre en dessous de cette limite qui, comme déjà indiqué, se traduirait par des complexités techniques considérables, tant pour la fabrication de la coupelle de pression que pour la réalisation de la gorge qui la reçoit dans le corps du maître-cylindre et se traduisant ainsi par un coût prohibitif.

La souplesse d'adaptation s'obtient essentiellement grâce au piston plongeur et au choix de la section du joint primaire d'isolation réalisant l'étanchéité entre le piston plongeur et le piston secondaire. Ce joint pourra être choisi dans la gamme quasi continue de dimensions disponibles pour des joints toriques.

Cette liberté est également importante pour l'impératif relatif à l'organisation des pressions dans la chambre primaire et secondaire du fait de la présence des aimants de détection du mouvement de la tige de commande et du piston primaire auquel elle est reliée dans le corps de l'unité de commande de freinage.

En effet, pour des raisons de tenue mécanique, le corps de l'unité de commande doit avoir une certaine épaisseur, aussi les aimants de détection de position qui coopèrent avec un capteur doivent fournir un champ magnétique suffisamment fort. Les aimants doivent ainsi avoir une dimension importante et en tous les cas, leur dimension ne peut descendre en dessous d'une dimension limite. Ces aimants par exemple de forme annulaire sont réalisés dans certains cas en des matériaux nobles tels que des Terres Rares. Le diamètre des aimants impose également une limite inférieure au diamètre minimum du piston primaire. La solution de l'invention permet de répondre à cette multiplicité de difficultés d'adaptation de la section hydraulique primaire et de la section hydraulique secondaire.

Le positionnement au repos des trous de réalimentation du piston primaire par rapport à la coupelle de pression primaire permet d'augmenter la course morte pour la simulation de la fonction de saut.

Suivant une autre caractéristique avantageuse, le piston primaire comporte une jupe munie d'un corps formant la cloison fermant le piston primaire et recevant d'un côté la tête du poussoir venant de la pédale de frein et portant de l'autre côté le piston plongeur, la jupe étant munie d'une collerette extérieure au-delà de la section arrière du piston primaire pour servir de butée venant contre un épaulement formé par l'alésage guidant le piston primaire et à l'avant du piston primaire, l'alésage de diamètre plus grand recevant le piston secondaire.

Suivant une autre caractéristique avantageuse, l'avant du piston primaire porte extérieurement un ou plusieurs aimants de détection de mouvement et logeant intérieurement l'extrémité du piston plongeur engagée sur une broche venant en saillie du corps du piston primaire. La place disponible à l'avant du piston primaire et surtout la section réduite que l'on peut donner à l'avant du piston primaire qui n'intervient ni dans l'alimentation de la chambre primaire ni dans l'étanchéité de cette chambre, permet d'avoir une place suffisante pour recevoir un aimant annulaire puissant entourant le piston primaire.

Suivant une autre caractéristique avantageuse, le piston plongeur comporte un logement axial recevant un ressort de compression s'appuyant au fond du piston plongeur et contre le fond en regard du piston secondaire.

On peut également avoir ainsi un ressort de compression qui exerce une réaction faible s'opposant à la force initiale exercée sur la pédale et le coefficient de ressort peut également être faible pour avoir un gradient de force initiale faible.

Suivant une autre caractéristique avantageuse, le piston secondaire est formé d'une partie arrière de grand diamètre et d'une partie avant de petit diamètre, la partie arrière étant logée dans un alésage de grand diamètre comportant le joint d'isolation secondaire et l'extrémité avant de diamètre réduit du piston secondaire est logée dans un alésage muni du joint de pression secondaire, la surface intérieure de la partie de grand diamètre du piston secondaire comportant un palier muni du joint d'isolation primaire par le piston plongeur.

**Dessins**

Une unité de commande de freinage selon l'invention est représentée dans les dessins annexés dans lesquels :

- la figure 1 est un schéma simplifié d'un maître-cylindre tandem connu,
- la figure 2 est une vue isométrique de l'unité de commande de freinage,
- la figure 3 est une coupe axiale de l'unité de commande de freinage de la figure 2,
- la figure 4A est une vue en coupe axiale du corps de l'unité de commande,
- la figure 4B est une coupe axiale des pistons de l'unité de commande,

- la figure 5 est un schéma simplifié du maître-cylindre tandem selon l'invention pour expliciter les caractéristiques des pistons du maître-cylindre.

## Description d'un mode de réalisation de l'invention

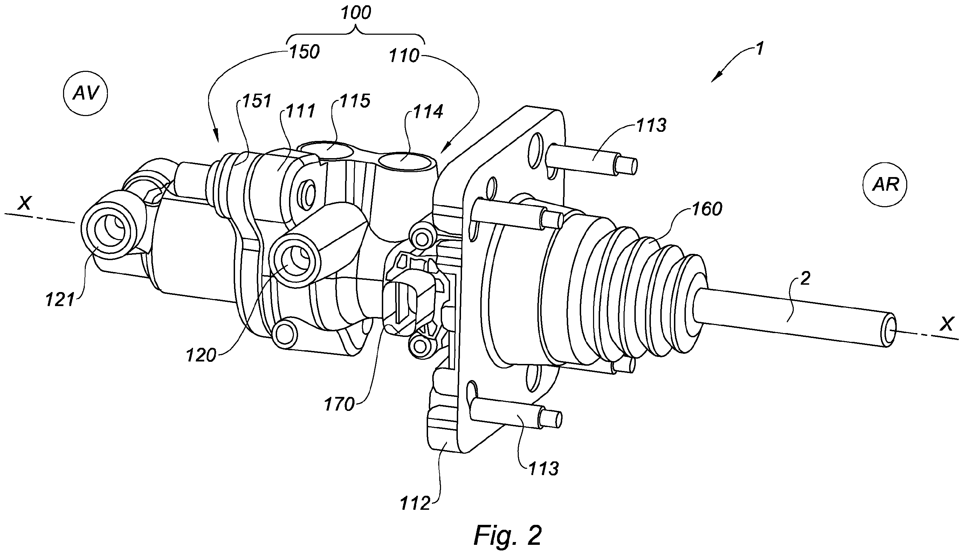

Selon la figure 2, l'unité de commande de freinage 1 représentée avec le côté arrière (AR) à droite et le côté avant (AV) à gauche selon le sens usuel de l'installation d'un maitre-cylindre de frein dans un véhicule se compose d'un corps 100 formé d'une partie principale 110 à l'arrière et d'une partie auxiliaire 150 à l'avant ; ces deux parties sont munies d'oreilles d'assemblage 111, 151 traversées par des vis ; deux paires d'oreilles dans des positions diamétralement opposées, apparaissent à la figure 2. Le corps 100 est muni d'un flasque 112 pour sa fixation à la cloison avant de l'habitacle du véhicule par des vis 113. Au-delà du flasque 112 apparaissent la tige poussoir 2 reliée à la pédale de frein et le soufflet 160 qui protège la traversée de la tige poussoir 2 et l'entrée de la partie principale 110 du corps. Devant le flasque 112 se trouve un capteur 170 muni d'un connecteur servant à son branchement, et qui détecte la demande du conducteur sous la forme du déplacement du poussoir 2.

La partie principale 110 comporte sur son dessus deux entrées 114, 115 pour le réservoir de liquide de frein ; l'entrée de droite 114 est reliée à la chambre primaire associée au circuit primaire et l'entrée de gauche 115 est reliée à la chambre secondaire du circuit secondaire. Sur le côté du corps, apparaissent le piquage primaire 120 auquel est relié le circuit primaire du système de frein et le piquage secondaire 121 auquel est raccordé le circuit secondaire du frein.

La partie principale 110 loge le piston primaire délimitant la chambre de pression primaire reliée au piquage primaire 120 et la partie auxiliaire 150 loge le piston secondaire délimitant la chambre secondaire fournissant la pression secondaire au piquage secondaire 121.

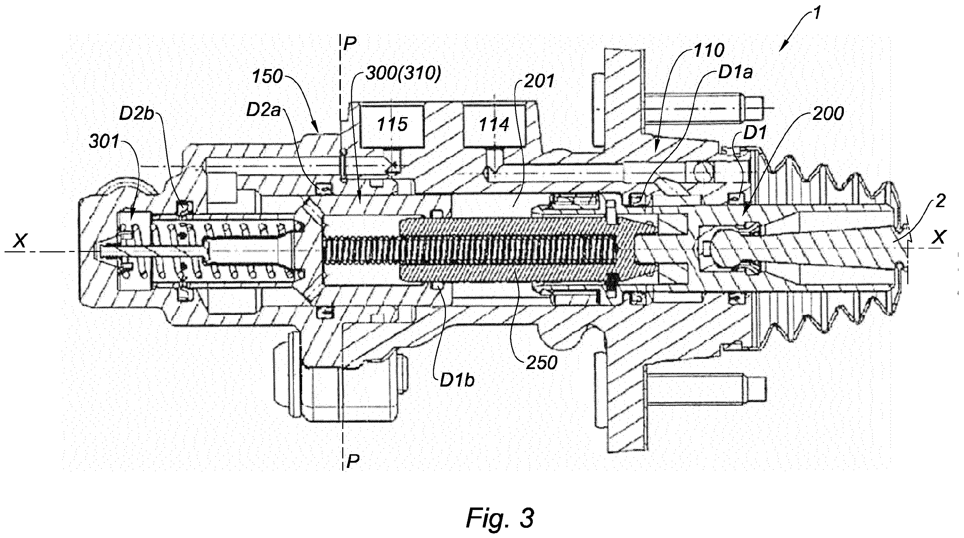

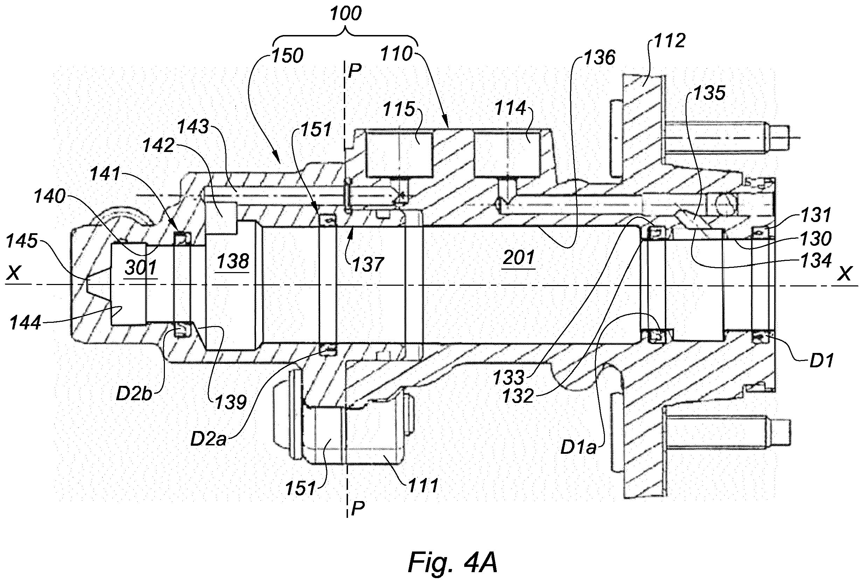

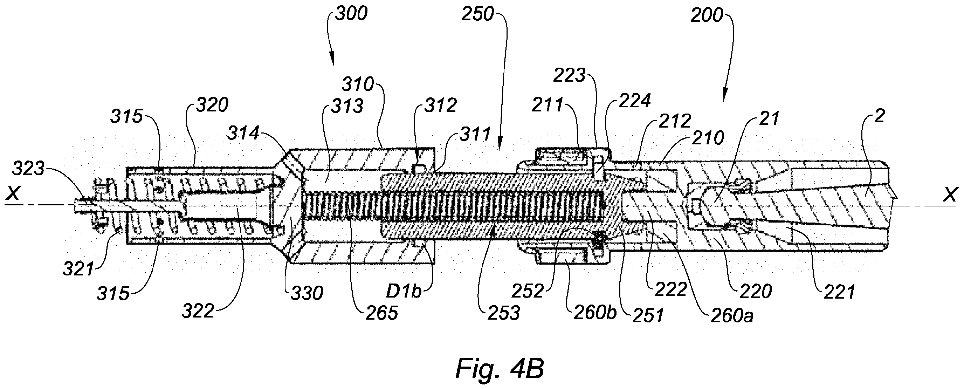

La figure 3 montre en coupe les détails de la structure de l'unité de commande de freinage 1 présentée à la figure 2 et dont les détails apparaissent mieux dans les vues en coupe séparées des figures 4A, 4B.

Le corps 100 reçoit dans sa partie principale 110 le piston primaire 200 et dans sa partie auxiliaire 150, le piston secondaire 300. Le piston primaire 200 porte à l'avant un piston plongeur 250 coulissant dans l'arrière du piston secondaire 300.

L'alésage qui reçoit le piston primaire 200 est muni d'un joint arrière D1 et d'un joint primaire de pression D1a.

Le piston secondaire 300 coopère avec un joint secondaire d'isolation D2a et un joint secondaire de pression D2b.

Enfin, le piston plongeur 250 coopère avec un joint primaire d'isolation D1b porté par l'arrière du piston secondaire 300.

La chambre primaire 201 est délimitée dans l'alésage, par le piston primaire 200, le piston plongeur 250 et le piston secondaire 300 ainsi que les joints D1a, D2a, D1b entre les parties fixes et mobiles. L'alimentation de la chambre primaire 201 se fait par des orifices d'alimentation 212 du piston primaire 200 et une gorge de distribution bordée par les joints D1, D1a.

La chambre secondaire 301 est délimitée par l'intérieur avant du piston secondaire 300, l'alésage logeant le piston 300 et le joint D2b. L'alimentation de la chambre secondaire 301 se fait par des orifices d'alimentation 315 du piston secondaire 300 et une gorge de distribution bordée par les joints D2a, D2b.

La figure 4A montre la coupe du corps 100 de l'unité de commande de freinage avec la partie principale 110 et la partie auxiliaire 150, assemblées suivant le plan de jonction PP. Suivant l'axe xx du corps qui est également l'axe de l'unité de commande, la partie principale 110 comporte de droite à gauche, un alésage d'entrée formant un premier palier 130 avec une gorge 131 recevant un joint arrière Dr pour réaliser l'étanchéité d'entrée du piston primaire et un alésage 132 avec une gorge 133 pour le joint primaire de pression D1a: l'alésage 132 n'est pas un palier dans le sens palier de guidage. Le guidage avant du piston primaire se fait à travers sa collerette 223 de la fig 4B sur l'alésage 136 du corps principal de la fig 3A. Le guidage arrière du piston primaire 200 se fait sur le palier 130. Le palier 130 et l'alésage 132 avec les joints Dr, D1a délimitent une gorge périphérique de distribution 134 dans laquelle débouche le conduit 135 venant de l'entrée 114 du réservoir de liquide de frein. Au-delà de cette gorge périphérique 134 et du joint primaire de pression D1a, la section s'agrandit par un alésage agrandi 136 se poursuivant dans la partie auxiliaire 150 par un même alésage 137 comportant une gorge périphérique 151 recevant le joint secondaire d'isolation D2a pour coopérer avec le piston secondaire 300. La chambre primaire 201 est située au niveau de l'alésage agrandi 136 en amont de la jonction de la partie principale 110 et de la partie auxiliaire 150.

L'alésage 137 comporte une gorge de distribution secondaire 138 bordée, côté avant, par un épaulement 139 avec réduction de diamètre pour former l'alésage 140 de la chambre secondaire 301. L'alésage 140 comporte une gorge périphérique 141 recevant le joint secondaire de pression D2b.

L'alimentation de la chambre secondaire 301 se fait par un passage 142 communiquant avec le canal 143 relié à l'entrée secondaire 115 du réservoir de liquide de frein.

Au-delà de l'alésage 140, la section de la chambre secondaire 201 augmente. Dans cette partie, la chambre secondaire 201 est reliée au piquage 121 du circuit secondaire. Dans l'axe xx, le fond 144 de la cavité a un enfoncement de centrage 145.

Selon l'usage, les joints primaire D1a et secondaire de pression D2b ainsi que le joint secondaire d'isolation D2a, sont appelés « coupelles ». Ils ont une forme annulaire de section en U couché dont l'ouverture est tournée vers le côté soumis à la plus forte des deux pressions de part et d'autre du joint de façon que le joint s'ouvre sous l'effet de la pression et s'applique contre le fond de la gorge par l'une des branches de la forme en U et contre la surface du piston primaire ou secondaire par l'autre branche de cette section en U. Cette forme connue ne nécessite pas de description détaillée.

La figure 4B montre avec la même orientation que les figures précédentes, la structure de la combinaison formée par le piston primaire 200 et le piston secondaire 300 reliés par le piston plongeur 250. Cet ensemble est aligné sur l'axe xx de l'unité de commande 1.

Le piston primaire 200 a une jupe cylindrique 210 portée par un corps 220 formant une cloison sensiblement en son milieu. L'ouverture arrière 221 du piston 200 reçoit la tête sphérique 21 du poussoir 2 accroché dans la cavité du corps 220. A l'avant, le piston primaire 200 reçoit solidairement en translation le piston plongeur 250. Pour des raisons mécaniques, le piston plongeur 250 n'est pas solidarisé du piston primaire 200 par une liaison rigide transversalement mais seulement dans le sens de l'axe xx. La liaison entre les deux pistons par l'intermédiaire de l'anneau de verrouillage assure bien leur solidarité en translation, autrement dit la transmission d'efforts axiaux entre eux, mais comporte aussi des jeux autorisant un degré de liberté radial nécessaire pour éviter tout coincement mécanique pouvant résulter entre autre de défauts d'alignement entre le plan de guidage du piston primaire dans le corps 110, et celui du piston secondaire dans le corps 150 qui coulisse dans le piston secondaire 300. Le piston plongeur 250 est engagé sur une broche 222 venant en saillie du corps du piston primaire 200 dans l'axe xx. L'extrémité arrière 251 du piston plongeur 250 est accrochée au piston primaire 200 par un organe de verrouillage 224 de type anneau de verrouillage logé d'une part dans une gorge intérieure périphérique 211 de la jupe 210 et d'autre part dans une gorge 252 correspondante près de l'extrémité arrière 251 du piston plongeur 250. La gorge 211 est formée dans une collerette 223 constituant une surface d'appui qui, en position de repos du piston 200, vient contre l'épaulement formé entre l'alésage agrandi 136 du corps 100 et l'alésage du palier 130 recevant et guidant la jupe 210 du piston primaire 200. L'alésage 132 n'est pas un palier de guidage. Entre l'extrémité arrière 252 du piston plongeur 250 et le fond de la cavité avant du piston primaire, la broche 222 porte un aimant annulaire 260 destiné à coopérer avec le capteur de position intégré dans la partie principale 110 du boîtier. Ce capteur 170 est représenté dans la figure 2, par son connecteur électrique.

L'avant de la jupe 210, au-delà de la collerette annulaire 223 logeant l'anneau fendu 224, est occupé par un aimant annulaire 260b destiné également à coopérer avec le capteur de position 170 représenté à la figure 1. Ce capteur de position fournit des signaux transmis au circuit de commande et de gestion du frein par l'intermédiaire d'un connecteur intégré.

Le piston plongeur 250 a un logement axial 253 recevant un ressort de compression 265 par lequel le piston primaire 200 s'appuie contre le piston secondaire 300 pour se repousser mutuellement en position de repos.

Le piston secondaire 300 est une pièce cylindrique à deux sections. A l'arrière, le piston 300 a une jupe 310 de grand diamètre et à l'avant, une jupe 320 de diamètre réduit. Ces deux jupes 310, 320 sont reliées par le corps 330 en forme de cloison. L'entrée de la jupe 310 de grand diamètre forme un palier 311 servant au guidage du piston plongeur 250. Ce palier 311 est muni d'une gorge périphérique 312 recevant le joint primaire d'isolation D1b. La cavité 313 délimitée dans la jupe de grand diamètre 310 et le piston plongeur 250 communique avec la gorge 138 par des perçages 314 par lesquels passe le liquide de frein arrivant du réservoir ou refoulé de manière à ne pas bloquer le mouvement du piston plongeur 250 par rapport au piston secondaire 300.

A l'avant, la jupe 320 du piston secondaire loge un ressort de compression 321 emmanché et guidé sur un corps tubulaire 322 se poursuivant par une broche 323. La pièce tubulaire 322 et la broche 323 sont libres de coulisser l'une par rapport à l'autre. Le ressort de compression 321 s'appuie contre le fond 144 de la chambre secondaire 301 de diamètre réduit de la partie auxiliaire 150 et repousse le piston secondaire 300 vers la droite.

Selon la figure 3, la chambre primaire 201 est délimitée dans l'alésage agrandi 136 entre l'avant du piston primaire 200, le piston plongeur 250 et l'arrière du piston secondaire 300. La chambre secondaire 301 est délimitée par l'alésage de section réduite 138 de la partie auxiliaire 150 et la jupe de petit diamètre 320 à l'avant du piston secondaire 300.

En position de repos, la chambre primaire 201 communique par l'espace entre l'avant de la jupe 210 et le piston plongeur 250 à travers les perçages d'alimentation 212 de la jupe 210 avec la gorge de distribution 134 reliée au conduit 135 de l'alimentation en liquide de frein à partir du réservoir. Il en est de même de la chambre secondaire 301 alimentée en position de repos à travers les orifices d'alimentation 315 qui se trouvent alors au-delà du joint secondaire de pression D2b dans la gorge de distribution 138 communiquant avec le réservoir par le passage 142 et le canal 143 jusqu'à l'entrée 115. Lorsque le piston primaire 200 est déplacé vers la gauche, la communication réalisée par des perçages 212 dans la jupe 210 du piston primaire 200 est coupée, ces perçages passant au-delà du joint de pression primaire D1a et coupant ainsi la communication avec l'arrivée de liquide du réservoir.

Il en est de même du piston secondaire 300 qui, poussé vers la gauche, fait passer les perçages d'alimentation

EP 3 022 096 B1

315 réalisés dans la jupe avant 320 du piston secondaire 300, au-delà du joint secondaire de pression D2b de sorte que la chambre secondaire est coupée de l'arrivée de liquide de frein. Dans cette position active de la chambre primaire 201 et de la chambre secondaire 301, chacune des chambres est coupée du réservoir et ne communique plus qu'avec le circuit primaire et le circuit secondaire du système de frein en y comprimant le liquide de frein.

Dans l'unité de commande selon l'invention dont la structure a été décrite ci-dessus en liaison avec les figures 2, 3, 4A, 4B, les joints primaire et secondaire de pression D1a, D2b ainsi que le joint arrière Dr et le joint d'isolation secondaire D2a sont des coupelles, c'est-à-dire des joints annulaires ayant une section de U couché avec deux branches, l'une s'appuyant au fond de la gorge, l'autre contre la jupe 210, 320 du piston primaire 200 ou du piston secondaire 300 et avec une orientation telle que la pression à laquelle ils sont soumis applique leurs lèvres d'étanchéité fermement contre la surface extérieure du piston primaire ou du piston secondaire. En d'autres termes, la cavité de la forme en U couché de chacune des coupelles est tournée vers le côté pression de la chambre primaire ou de la chambre secondaire.

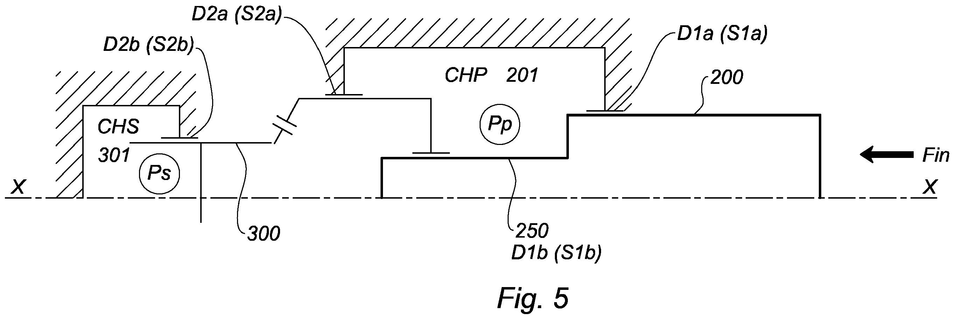

A la figure 5, le schéma simplifié du maître-cylindre tandem 100 selon l'invention, représenté en demi-coupe par rapport à son axe xx permet d'exprimer la caractéristique reliant la force d'entrée $F_{IN}$ à la pression secondaire Ps dans la chambre secondaire CH2 (301) :

- Le piston primaire 200 coopère avec le joint primaire de pression D1a de section S1a.
- Le piston plongeur 250 coopère avec le piston secondaire 300 par le joint primaire d'isolation S1b de section D1b.
- Le piston secondaire 300 coopère avec un joint secondaire de pression D2b de section S2b et avec un joint secondaire d'isolation D2a de section S2a.

Dans ces conditions :

- La section avant hydraulique S1 du piston primaire 200 est la différence entre sa section primaire de pression S1a et sa section primaire d'isolation S1b, soit :

$$S1 = S1a - S1b$$

- La section arrière hydraulique S2 du piston secondaire 300 est la différence entre sa section secondaire d'isolation S2a et sa section primaire d'isolation S1b, soit :

$$S2 = S2a - S1b$$

- La section avant du piston secondaire 300 est la section secondaire de pression S2b.

Comme un piston plongeur 250 est prévu entre le piston primaire et le piston secondaire, la section équivalente Se (formule (5)) s'écrit comme suit :

$$Se = \frac{S_1}{S_2} \cdot S_{2b} = \frac{S1a - S1b}{S2a - S1b} \cdot S2b \qquad (7)$$

Cette formule peut exprimer S1b par une simple transformation :

$$S1b = S2a \frac{\dfrac{Se}{S2b} - \dfrac{S1a}{S2a}}{\dfrac{Se}{S2b} - 1}$$

soit sous la forme suivante :

$$S1b = A\,\frac{Se - B}{Se - C} \qquad (8)$$

Dans cette formule, A, B, C sont des constantes prédéfinies que l'on obtient en écrivant la formule (8) sous la forme suivante :

$$\left( S1b = S2a \cdot \frac{Se - \dfrac{S1a \cdot S2b}{S2a}}{Se - S2b} \right) \qquad (8bis)$$

Ainsi :

$$A = S2a$$

$$B = \frac{S1a \cdot S2b}{S2a}$$

$$C = S2b$$

Les sections S1a, S2a, S2b sont imposées par les caractéristiques que doit avoir le maître-cylindre tandem et les limites inférieures imposées aux diamètres des coupelles.

Se est une valeur fixée au départ puisqu'il s'agit de la caractéristique définissant la relation entre la force appliquée à l'entrée $F_{IN}$ et la pression secondaire Ps dans la chambre secondaire.

La section du joint primaire d'isolation D1b et donc son diamètre et celui du piston plongeur 250 sont ainsi clairement établis puisque la section S1b donne le diamètre [D1b] du joint D1b :

$$[D1b] = 2\,\sqrt{\frac{S1b}{\pi}}$$

**Revendications**

1. Unité de commande de freinage ayant un piston primaire délimitant une chambre primaire reliée à un circuit primaire et un piston secondaire délimitant une chambre secondaire reliée à un circuit secondaire, l'unité de commande recevant la demande de freinage par le poussoir actionné par le conducteur, cette demande étant détectée par le capteur de déplacement du mouvement du poussoir pour commander le piston primaire qui lui-même pousse le piston secondaire, en générant une pression dans la chambre primaire qui exerce alors une poussée hydraulique sur la section arrière du piston secondaire,
unité **caractérisée par**

   - un piston plongeur (250) porté par le piston primaire (200), solidaire en translation de celui-ci et pénétrant librement dans le piston secondaire (300) de sorte que la chambre primaire (201) est délimitée entre le piston primaire (200), le piston secondaire (300) dans leur alésage et le piston plongeur (250),
   - le piston primaire (200) ayant un joint primaire de pression (D1a), le piston secondaire (300) un joint secondaire de pression (D2b) et le piston plongeur (250) étant muni d'un joint primaire d'isolation (D1b) pour son engagement

9

dans le piston secondaire (300) de sorte que

- le piston primaire (200) a une section hydraulique avant (S1) égale à la différence de sa section primaire de pression (S1a) et de sa section primaire d'isolation (S1b), et
- le piston secondaire (300) a une section hydraulique arrière (S2) égale à la différence entre sa section secondaire d'isolation (S2a) et sa section primaire d'isolation (S1b),
- et la section avant (S2b) du piston secondaire (300) est liée à la section équivalente (Se) reliant la force d'entrée ($F_{IN}$) à la pression secondaire (Ps) par la relation

$$Slb = A \frac{Se - B}{Se - C}$$

cette relation donnant la section primaire d'isolation (S1b) et le diamètre du joint primaire d'isolation (D1b) en fonction de la section équivalente (Se).

2. Unité de commande de freinage selon la revendication 1,
**caractérisée en ce que**
le joint primaire de pression (D1a), le joint secondaire de pression (D2b) sont des coupelles, c'est-à-dire des joints annulaires à section en U couché avec deux lèvres et le joint primaire d'isolation (D1b) est un joint torique.

3. Unité de commande de freinage selon la revendication 1,
**caractérisée en ce que**
le piston primaire (200) comporte une jupe (210) munie d'un corps (220) formant la cloison fermant le piston primaire et recevant d'un côté la tête (21) du poussoir (2) venant de la pédale de frein et portant de l'autre côté le piston plongeur (250), la jupe (210) étant munie d'une collerette extérieure (223) au-delà de la section arrière du piston primaire pour servir de butée venant contre un épaulement formé par l'alésage (130, 132) guidant le piston primaire (200) et à l'avant du piston primaire, l'alésage (136) de diamètre plus grand recevant le piston secondaire (300).

4. Unité de commande de freinage selon la revendication 2,
**caractérisée en ce que**
l'avant du piston primaire (200) porte extérieurement un aimant (260) de détection de mouvement et logeant intérieurement l'extrémité (251) du piston plongeur (250) engagée sur une broche (222) venant en saillie du corps du piston primaire (200).

5. Unité de commande de freinage selon la revendication 1,
**caractérisée en ce que**
le piston plongeur (250) comporte un logement axial (253) recevant un ressort de compression (265) s'appuyant au fond du piston plongeur (250) et contre le fond en regard du piston secondaire (300).

6. Unité de commande de freinage selon la revendication 1,
**caractérisée en ce que**
le piston secondaire (300) est formé d'une partie arrière (310) de grand diamètre et d'une partie avant (320) de petit diamètre, la partie arrière étant logée dans un alésage de grand diamètre (136, 137) comportant le joint secondaire d'isolation (D2a) et l'extrémité avant (320) de diamètre réduit du piston secondaire (300) est logée dans un alésage (140) muni du joint secondaire de pression (D2b), la surface intérieure de la partie de grand diamètre du piston secondaire comportant un palier (311) muni du joint primaire d'isolation (D1b) par le piston plongeur (250).

**Patentansprüche**

1. Bremssteuereinheit, die einen Primärkolben, der eine Primärkammer begrenzt, die mit einem Primärkreis verbunden ist, und einen Sekundärkolben aufweist, der eine Sekundärkammer begrenzt, die mit einem Sekundärkreis verbunden ist, wobei die Steuereinheit die Bremsanforderung durch den Schieber empfängt, der von dem Fahrer betätigt wird, wobei diese Anforderung durch den Bewegungssensor der Bewegung des Schiebers erfasst wird, um den Primärkolben zu steuern, der selbst den Sekundärkolben schiebt und dabei einen Druck in der Primärkammer erzeugt, der dann einen hydraulischen Schub auf den hinteren Abschnitt des Sekundärkolbens ausübt, wobei die Einheit **gekennzeichnet ist durch**

- einen Tauchkolben (250), der von dem Primärkolben getragen (200) wird, der mit diesem längsverschieblich verbunden ist und frei in den Sekundärkolben (300) derart eindringt, dass die Primärkammer (201) zwischen dem Primärkolben (200), dem Sekundärkolben (300) in ihrer Bohrung und dem Tauchkolben (250) begrenzt ist,
- wobei der Primärkolben (200) eine primäre Druckdichtung (D1a), der Sekundärkolben (300) eine sekundäre Druckdichtung (D2b) aufweist und der Tauchkolben (250) mit einer primären Isolationsdichtung (D1b) für sein Eingreifen mit dem Sekundärkolben (300) derart ausgestattet ist, dass
- der Primärkolben (200) einen vorderen hydraulischen Querschnitt (S1) aufweist, der gleich der Differenz von seinem primären Druckquerschnitt (S1a) und von seinem primären Isolationsquerschnitt (S1b) ist, und
- der Sekundärkolben (300) einen hinteren hydraulischen Querschnitt (S2) aufweist, der gleich der Differenz zwischen seinem sekundären Isolationsquerschnitt (S2a) und seinem primären Isolationsquerschnitt (S1b) ist,
- und der vordere Querschnitt (S2b) des Sekundärkolbens (300) mit dem äquivalenten Querschnitt (Se) verbunden ist, der die Eingangskraft ($F_{IN}$) mit dem Sekundärdruck (Ps) durch die Beziehung

$$S1b = A \, \frac{Se - B}{Se - C}$$

verbindet, wobei die Beziehung den primären Isolationsquerschnitt (S1b) und den Durchmesser der primären Isolationsdichtung (D1b) in Abhängigkeit von dem äquivalenten Querschnitt (Se) gibt.

2. Bremssteuereinheit nach Anspruch 1, **dadurch gekennzeichnet, dass**
die primäre Druckdichtung (D1a), die sekundäre Druckdichtung (D2b) Schalen sind, das heißt ringförmige Dichtungen mit einem Querschnitt in Form eines liegenden U mit zwei Lippen, und die primäre Isolationsdichtung (D1b) ein O-Ring ist.

3. Bremssteuereinheit nach Anspruch 1, **dadurch gekennzeichnet, dass**
der Primärkolben (200) einen Mantel (210) aufweist, der mit einem Körper (220) versehen ist, der die Trennwand bildet, die den Primärkolben verschließt und auf einer Seite den Kopf (21) des Schiebers (2), der von dem Bremspedal kommt, und auf der anderen Seite den Tauchkolben (250) trägt, wobei der Mantel (210) mit einem äußeren Kragen (223) jenseits des hinteren Querschnitts des Primärkolbens versehen ist, um als Anschlag zu dienen, der gegen eine Schulter anliegt, die durch die Bohrung (130, 132) gebildet ist, die den Primärkolben (200) führt, und wobei die Bohrung (136) mit größerem Durchmesser an der Vorderseite des Primärkolbens den Sekundärkolben (300) aufnimmt.

4. Bremssteuereinheit nach Anspruch 2, **dadurch gekennzeichnet, dass**
die Vorderseite des Primärkolbens (200) außen einen Magneten (260) zur Bewegungserkennung trägt und innen das Ende (251) des Tauchkolbens (250) aufnimmt, das in einen Stift (222) eingreift, der aus dem Körper des Primärkolbens (200) vorsteht.

5. Bremssteuereinheit nach Anspruch 1, **dadurch gekennzeichnet, dass**
der Tauchkolben (250) eine axiale Aufnahme (253) aufweist, die eine Druckfeder (265) aufnimmt, die sich auf den Boden des Tauchkolbens (250) und gegen den Boden gegenüber von dem Sekundärkolben (300) abstützt.

6. Bremssteuereinheit nach Anspruch 1, **dadurch gekennzeichnet, dass**
der Sekundärkolben (300) aus einem hinteren Teil (310) mit großem Durchmesser und einem vorderen Teil (320) mit kleinem Durchmesser gebildet ist, wobei der hintere Teil in einer Bohrung mit großem Durchmesser (136, 137) angeordnet ist, die die sekundäre Isolationsdichtung (D2a) aufweist, und das vordere Ende (320) mit reduziertem Durchmesser des Sekundärkolbens (300) in einer Bohrung (140) angeordnet ist, die mit der sekundären Druckdichtung (D2b) versehen ist, wobei die Innenfläche des Teils mit großem Durchmesser des Sekundärkolbens ein Lager (311) aufweist, das mit der primären Isolationsdichtung (D1b) des Tauchkolbens (250) versehen ist.

## Claims

1. Brake control unit having a primary piston defining a primary chamber connected to a primary circuit and a secondary piston defining a secondary chamber connected to a secondary circuit, the control unit receiving the braking demand signal supplied via the push-rod actuated by the driver, said demand signal being detected by the displacement sensor for the movement of the push-rod in order to control the primary piston, which itself pushes against the secondary piston, thereby generating a pressure inside the primary chamber which then exerts a hydraulic thrust on the rear cross section of the secondary piston, said unit being **characterized by**

- a plunger piston (250) carried by the primary piston (200), being integral in translation with the latter and penetrating freely into the secondary piston (300), such that the primary chamber (201) is defined between the primary piston (200), the secondary piston (300) in their bore and the plunger piston (250),
- the primary piston (200) having a primary pressure seal (D1a), the secondary piston (300) having a secondary pressure seal (D2b), and the plunger piston (250) being equipped with a primary insulating seal (D1b) for its engagement in the secondary piston (300), such that

- the primary piston (200) has a front hydraulic cross section (S1) equal to the difference in its primary pressure cross section (S1a) and in its primary insulating cross section (S1b), and
- the secondary piston (300) has a rear hydraulic cross section (S2) equal to the difference between its secondary insulating cross section (S2a) and its primary insulating cross section (S1b),
- and the front cross section (S2b) of the secondary piston (300) is connected to the equivalent cross section (Se) connecting the inlet force ($F_{IN}$) to the secondary pressure (Ps) by the equation

$$S1b = A\,\frac{Se - B}{Se - C}$$

said equation indicating the primary insulating cross section (S1b) and the diameter of the primary insulating seal (D1b) as a function of the equivalent cross section (Se).

2. Brake control unit according to Claim 1, **characterized in that** the primary pressure seal (D1a) and the secondary pressure seal (D2b) are cups, that is to say annular seals having a recumbent U-shaped cross section with two lips, and the primary insulating seal (D1b) is a toric seal.

3. Brake control unit according to Claim 1, **characterized in that** the primary piston (200) includes a skirt (210) equipped with a body (220) forming the partition closing the primary piston and receiving, on one side, the head (21) of the push-rod (2) originating from the brake pedal and carrying, on the other side, the plunger piston (250), the skirt (210) being equipped with an external collar (223) beyond the rear cross section of the primary piston intended to serve as a stop abutting against a shoulder formed by the bore (130, 132) guiding the primary piston (200) and, at the front of the primary piston, the bore (136) with a larger diameter receiving the secondary piston (300).

4. Brake control unit according to Claim 2, **characterized in that** the front of the primary piston (200) carries externally a magnet (260) for detecting movement and housing internally the extremity (251) of the plunger piston (250) engaged on a pin (222) projecting from the body of the primary piston (200).

5. Brake control unit according to Claim 1, **characterized in that** the plunger piston (250) includes an axial housing (253) intended to accommodate a compression spring (265) pressing against the base of the plunger piston (250) and against the base facing towards the secondary piston (300).

6. Brake control unit according to Claim 1, **characterized in that** the secondary piston (300) is formed by a rear part (310) of large diameter and by a front part (320) of small diameter, the rear part being housed in a bore having a large diameter (136, 137) including the secondary insulating seal (D2a), and the front extremity (320) of reduced diameter of the secondary piston (300) being housed in a bore (140) equipped with the secondary pressure seal (D2b), the internal surface of the part of large diameter of the secondary piston including a bearing (311) equipped with the primary insulating seal (D1b) by the plunger piston (250).

*Fig. 1*

EP 3 022 096 B1

*Fig. 2*

EP 3 022 096 B1

*Fig. 3*

Fig. 4A

Fig. 4B

EP 3 022 096 B1

Fig. 5

**EP 3 022 096 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 2155571 A